# FASCICULE DE BREVET EUROPEEN

(11) **EP 0 494 019 B1**
(45) Date de publication et mention de la délivrance du brevet: **18.10.1995**
(21) Numéro de dépôt: 91403551.4
(22) Date de dépôt: 27.12.1991
(51) Int. Cl.: B64D 1/04

(54) **Dispositif d'éjection hydraulique par poussoirs avec système de ravalage pneumatique**
Hydraulische, stösselbetätigte Abwurfvorrichtung mit automatischer Nachladung
Hydraulic, tappet actuated ejection device with automatic recharging system

(30) Priorité: 31.12.1990 FR 9016534
(43) Date de publication de la demande: 08.07.1992
(73) Titulaire: R. ALKAN & Cie., 94460 Valenton (FR)
(72) Inventeur: Grosselin, Daniel, F-77680 Roissy (FR)
(74) Mandataire: Hud, Robert

(56) Documents cités:
- WO-A-81/03314
- DE-C- 3 813 048
- FR-A- 2 597 553
- US-A- 4 552 327

## Description

L'invention concerne un dispositif d'éjection hydraulique de charge par poussoirs et, plus particulièrement, un tel dispositif comportant un système de ravalage pneumatique des poussoirs.

Dans le domaine des éjecteurs de charge par poussoirs, on connaît déjà des systèmes de ravalage c'est-à-dire de retour des poussoirs à leur position initiale après leur action d'éjection. Ceci est généralement effectué sous l'action de ressorts bandés par le mouvement d'éjection, mais qui sont lourds et encombrants.

On connaît aussi des systèmes utilisant des poussoirs hydrauliques ou pneumatiques à sections étagées, la plus grande utilisée pour l'éjection et la plus petite pour le ravalage.

Par exemple le brevet allemand DE-C-3 813 408 au nom de MESSERSCHMITT-BOLKOW-BLOHM, qui fait appel à ce dernier système, et qui montre un dispositif d'éjection selon le préambule de la revendication 1, utilise des circuits pneumatiques et hydrauliques clos et réactivables par une pompe hydraulique électrique intégrée avec un programmateur électrique de séquences. Un double piston formant moteur hydraulique est mû par le circuit pneumatique et agit sur deux poussoirs d'éjection, en première séquence pour l'éjection puis en deuxième séquence et en fin de course du double piston pour le ravalage. Ainsi ce sont la même réserve d'énergie pneumatique et le même mouvement d'avancée du double piston qui procurent successivement l'éjection et le ravalage. Ce dispositif conduit à des circuits hydrauliques multiples, commandés par de nombreuses vannes. Il est donc d'une réalisation compliquée et d'un prix de revient élevé.

La présente invention a pour objet de remédier aux inconvénients présentés par les dispositifs connus d'éjection avec ravalage mentionnés ci-avant et elle propose un dispositif d'éjection hydraulique avec système de ravalage pneumatique qui est d'une grande simplicité et donc d'un prix de revient peu élevé, tout en étant d'une grande efficacité. Le dispositif selon l'invention est plus particulièrement destiné à compléter un ensemble de largage et d'éjection de missile mettant en oeuvre les enseignements des brevets français n° 86.05517 (FR-A-2 597 557) et n° 87.07889 (FR-A-2 616 123) de la société déposante.

Selon l'invention le dispositif d'éjection hydraulique par poussoirs avec système de ravalage est du type comprenant un moyen pneumatique de commande de l'alimentation hydraulique des chambres de sortie de vérins d'éjection à double effet et un moyen assurant sélectivement la mise sous pression de gaz et la mise à l'air libre d'un conduit d'alimentation pneumatique dudit moyen de commande, et il se caractérise en ce que le ravalage des dits vérins d'éjection est assuré par l'alimentation pneumatique des chambres de retraction de ces vérins d'éjection, un accumulateur pneumatique étant relié à cet effet audit conduit d'alimentation à travers un élément anti-retour qui n'autorise le passage de gaz sous pression que dans le sens allant dudit conduit d'alimentation vers l'accumulateur, ce dernier étant relié par des conduits auxdites chambres de rétraction des vérins d'éjection.

Les poussoirs d'éjection sont tels que leur surface, sur laquelle s'exerce la pression pneumatique de ravalage provenant de l'accumulateur est sensiblement moindre que celle sur 'laquelle s'exerce la pression hydraulique d'éjection.

Une valve de séquence est disposée en parallèle sur l'élément anti-retour en étant conçue pour court-circuiter ledit élément anti-retour en vidangeant les conduits de ravalage en fin de phase de ravalage des poussoirs d'éjection quand la pression dans le conduit d'alimentation pneumatique devient inférieure à une valeur déterminée.

Ainsi, lorsque le conduit d'alimentation pneumatique est mis en liaison avec la source de gaz sous pression, les chambres de sortie des vérins d'éjection sont alimentées hydrauliquement pour commander la sortie des poussoirs d'éjection. Simultanément, la pression pneumatique est appliquée aux faces de moindre section des poussoirs d'éjection de sorte qu'en fin de course d'éjection, lors de la mise à l'air libre du conduit d'alimentation pneumatique, ladite pression pneumatique assure automatiquement le ravalage des poussoirs d'éjection. Lorsque, en décroissant, la pression pneumatique de ravalage atteint ladite valeur déterminée, la valve de séquence se déclenche pour court-circuiter l'élément anti-retour et assurer la vidange des conduits de ravalage.

Pour bien faire comprendre le dispositif selon la présente invention on en décrira ci-après, à titre d'exemples, une forme de réalisation préférée et une variante en référence au dessin schématique annexé dans lequel :
la figure 1 est un schéma synoptique d'une forme de réalisation du dispositif selon l'invention, conçu pour constituer un complément à un ensemble de largage et d'éjection de missile qui emploie les systèmes décrits dans les brevets français n° 86.05517 et n° 87.07889 de la société déposante ;
la figure 2 est, à plus grande échelle, une vue partielle en coupe verticale axiale d'une variante du dispositif de la figure 1 ; et
la figure 3 est, à plus grande échelle, une coupe prise selon la ligne III-III de la figure 2.

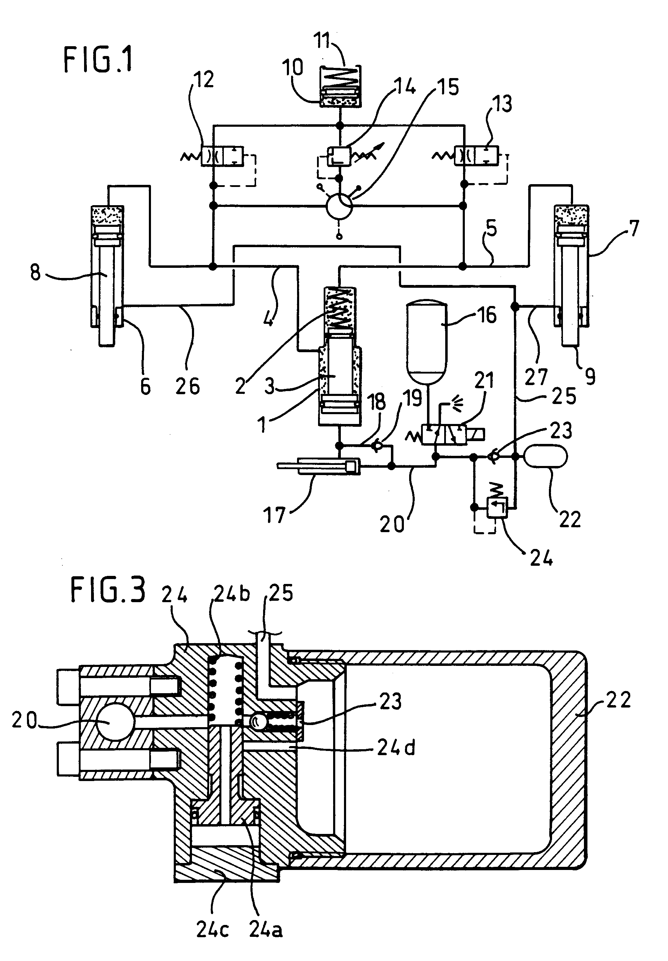

En référence à la figure 1 on a représenté en 1 un dispositif hydro-pneumatique comprenant un cylindre à l'intérieur duquel peut se déplacer, sous l'effet d'une pression pneumatique et contre l'action d'un ressort 2, un piston double 3 qui alimente en fluide hydraulique, par des conduits indépendants 4 et 5, des vérins 6, 7 à double effet pour commander la sortie de poussoirs d'éjection 8, 9. Un montage comprenant un accumulateur 10 de fluide hydraulique avec piston à ressort 11, des clapets à seuil 12, 13, une soupape de régulation 14 et un robinet distributeur à boisseau rotatif 15 permet de créer une différence de pression réglable entre les poussoirs 8 et 9. Un dispositif de ce genre est représenté et décrit dans le brevet français n° 86.05517 (FR-A-2 597 553) de la société déposante.

De façon connue d'après le brevet français n° 87.07889 (FR-A-2 616 123) de la société déposante, la pression pneumatique en provenance d'une bouteille de gaz sous pression 16 est appliquée au dispositif transmetteur 1 par l'intermédiaire d'un piston 17 à sections multiples qui commande successivement le déverrouillage de la charge à larguer, puis l'actionnement du piston 3. Une conduite 18 court-circuite le piston 17 et porte un clapet anti-retour 19 interdisant la circulation de gaz de la bouteille 16 vers le dispositif 1.

Entre la bouteille 16 de gaz sous pression et le conduit moteur 20 d'alimentation du piston 17 est disposée une électrovanne 21 à trois voies assurant sélectivement soit la liaison entre la bouteille 16 et le circuit moteur 20, soit la mise à l'air libre de ce circuit. Un accumulateur de pression pneumatique 22 est relié au conduit moteur 20 avec interposition d'un clapet anti-retour 23. Une valve de séquence 24, détaillée à la figure 3, est disposée en parallèle sur le clapet anti-retour 23. Elle comporte un boisseau 24a piloté par la pression dans le circuit moteur 20, contre l'action d'un ressort 24b.

Le réservoir 22 est relié, par une conduite commune 25 et par des conduites particulières respectivement 26, 27, à la seconde chambre des vérins 6 et 7 respectivement.

Le fonctionnement du dispositif est le suivant. Pour commander l'éjection, l'électro-vanne 21 vient dans sa position opposée à celle représentée à la figure 1 en mettant alors en communication la bouteille 16 et le conduit moteur 20. Il se produit alors le déverrouillage de la charge par le piston 17, puis l'éjection par les poussoirs 8, 9. Simultanément l'accumulateur 22 est mis en pression à travers le clapet anti-retour 23 et cette pression, transmise par les conduites 25, 26, 27, agit sur les poussoirs d'éjection 8, 9 à l'opposé de la pression d'éjection mais sur une surface bien moindre (par exemple sur 2 cm² au lieu de 20 cm²).

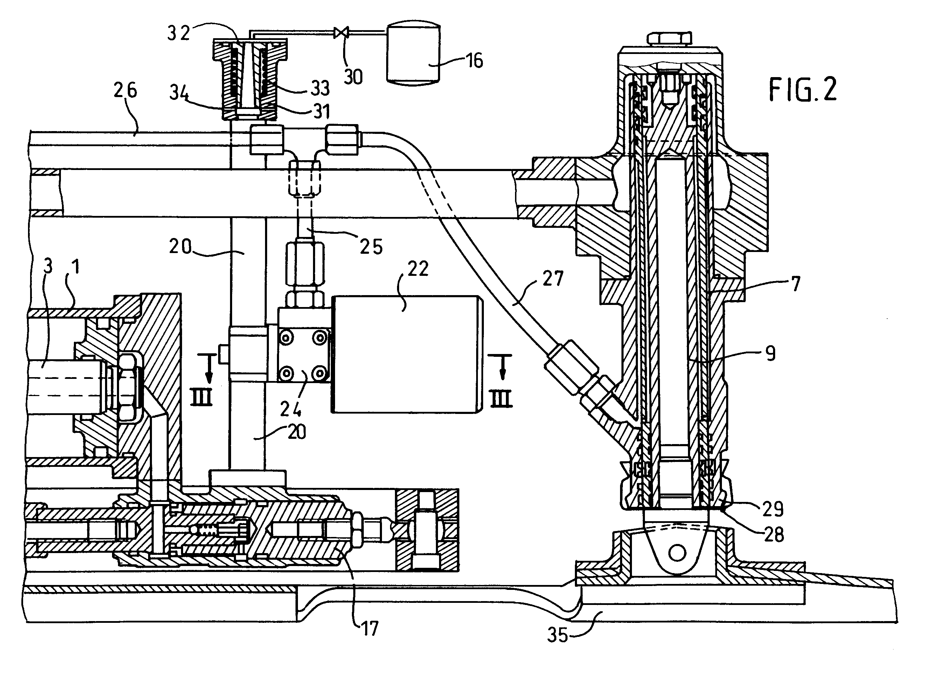

A la fin de la course d'éjection des poussoirs 8 et 9, l'électro-vanne 21 vient dans la position de la figure 1 en mettant en liaison le conduit moteur 20 avec l'atmosphère. Lors de cette mise à l'air libre des circuits d'éjection la pression de ravalage provenant de l'accumulateur 22 remonte les poussoirs d'éjection 8, 9 jusqu'à immobilisation au moyen d'un dispositif de retenue à ressorts 28 s'appuyant sur une excroissance fixe de retenue 29 (voir figure 2).

Lorsque la pression d'éjection dans le conduit 20 baisse au-dessous d'une valeur prédéterminée (par exemple 15 bars) le boisseau 24a de la valve de séquence 24, sous l'action de son ressort 24b, vient en position de butée sur le bouchon 24c pour court-circuiter le clapet anti-retour 23 par le passage 24d, ce qui vidange le circuit de ravalage 25, 26, 27.

En variante, comme représenté à la figure 2, l'électro-vanne 21 à trois voies pour la mise à l'air libre du circuit de gaz moteur 20 est remplacée par une électro-vanne 30 à deux voies, plus simple et plus fiable. L'électro-vanne 30 est alors complétée par un purgeur automatique 31 qui comporte un venturi coulissant 32 rappelé par un ressort 33 et pouvant, contre l'action de ce ressort, venir obturer de petits orifices 34 de remise à l'air libre ménagés dans la paroi du purgeur 31. Lorsque le débit moteur de gaz est établi à partir de la bouteille 16, la différence de pression produite par le venturi 32 et agissant sur sa face amont repousse celui-ci à l'encontre du ressort 33 ce qui obture les orifices 34 de remise à l'air libre. La force du ressort peut par exemple être de 100 N. Lorsque le débit d'éjection baisse au-dessous de la valeur déterminée, le ressort 33 repousse le venturi 32 ce qui assure la vidange, par les orifices 34, du circuit de ravalage 25, 26, 27.

Dans certaines réalisations comme par exemple celle dessinée partiellement à la figure 2, les poussoirs 8 et 9 sont reliés par un élément longitudinal 35 qui répartit sur toute sa longueur l'effort de poussée sur la charge. Il est alors préférable que cet élément 35, soumis au vent relatif, remonte parallélement à lui-même au cours de son ravalage. A cet effet, les conduits 26 et 27 sont sensiblement de même longueur.

On comprendra que la description ci-dessus a été donnée à titre d'exemple, sans caractère limitatif, et que des adjonctions ou des modifications constructives pourraient y être apportées sans sortir du cadre de l'invention telle que revendiquée.

## Revendications

1. Dispositif d'éjection hydraulique par poussoirs avec système de ravalage, ledit dispositif d'éjection comprenant un moyen pneumatique (1) de commande de l'alimentation hydraulique des chambres de sortie de vérins d'éjection (6,8-7,9) à double effet et un moyen (21, 30, 31,32) assurant sélectivement la mise sous pression de gaz et la mise à l'air libre d'un conduit d'alimentation pneumatique (20) dudit moyen de commande (1), caractérisé en ce que le ravalage des dits vérins d'éjection (6,8-7,9) est assuré par l'alimentation pneumatique des chambres de rétraction de ces vérins d'éjection, un accumulateur pneumatique (22) étant relié à cet effet audit conduit d'alimentation (20) à travers un élément anti-retour (23) qui n'autorise le passage du gaz sous pression que dans le sens conduit d'alimentation (20) vers l'accumulateur (22), le dit accumulateur (22) étant relié par des conduits (25, 26, 27) auxdites chambres de rétraction des vérins d'éjection (6,8-7,9).

2. Dispositif d'éjection selon la revendication 1, caractérisé en ce que les poussoirs d'éjection (8, 9) sont tels que leur surface sur laquelle s'exerce la pression pneumatique de ravalage sortant de l'accumulateur (22) est sensiblement moindre que celle sur laquelle s'exerce la pression hydraulique d'éjection.

3. Dispositif d'éjection selon la revendication 1 ou la revendication 2, caractérisé en ce qu'il comprend une valve de séquence (24) disposée en parallèle sur l'élément anti-retour (23) et conçue, en fin de phase de ravalage des poussoirs d'éjection (8,9) lorsque la pression dans ledit conduit d'alimentation (20) devient inférieure à une valeur déterminée, pour court-circuiter ledit élément anti-retour (23) en vidangeant les conduits de ravalage (25, 26, 27).

4. Dispositif d'éjection selon l'une quelconque des revendications 1 à 3, caractérisé en ce que ledit moyen assurant la mise sous pression et la mise à l'air libre du conduit d'alimentation pneumatique (20) est constitué par une électro-vanne à trois voies (21).

5. Dispositif d'éjection selon l'une quelconque des revendications 1 à 3, caractérisé en ce que le moyen assurant la mise sous pression et la mise à l'air libre du conduit d'alimentation pneumatique (20) est constitué par une électro-vanne à deux voies (30) à laquelle est associé un purgeur automatique (31).

6. Dispositif d'éjection selon l'une quelconque des revendications précédentes, caractérisé en ce que chaque vérin d'éjection (6, 7) est équipé d'un système de retenue (28, 29) immobilisant automatiquement le poussoir d'éjection (8, 9) en position rétractée à la fin de la course de ravalage.

7. Dispositif d'éjection selon l'une quelconque des revendications précédentes, caractérisé en ce que les conduits (26, 27) reliant l'accumulateur pneumatique (22) aux chambres de rétraction des vérins d'éjection (6,8 - 7,9) sont sensiblement de même longueur.

## Claims

1. Device for hydraulic ejection by means of pistons having a return system, said ejection system comprising pneumatic means (1) for controlling the hydraulic supply of the output chambers of a double action ejection jack (6, 8-7, 9) and means (21, 30, 31, 32) providing, selectively, the application of gas pressure 10 to, and the releasing to the atmosphere of, a pneumatic supply pipe (20) of said control means (1), characterised in that the return of said ejection jacks (6, 8-7, 9) is performed by the pneumatic supply to retraction chambers of these ejection valves, a pneumatic accumulator (22) being connected, for this purpose, to said supply pipe (20) via a non-return element (23) which only permits the pressurised gas to pass through in the direction of the supply pipe (20) towards the accumulator (22), said accumulator (22) being connected by pipes (25, 26, 27) to the retraction chambers of the ejection jacks (6, 8-7, 9).

2. Ejection device according to claim 1, characterised in that the ejection pistons (8, 9) are such that the surface thereof on which the pneumatic return pressure emerging from the accumulator (22) is exerted is substantially less than that on which the hydraulic ejection pressure is exerted.

3. Ejection device according to claim 1 or claim 2, characterised in that it comprises a sequence valve (24) disposed in parallel on the non-return element (23), and in that, at the end of the return phase of the ejection pistons (8, 9), when the pressure in said supply pipe (20) becomes lower than a predetermined value, it is designed to short-circuit the said non-return element (23) by draining the return pipes (25, 26, 27).

4. Ejection device according to any of claims 1 to 3, characterised in that said means which pressurise the pneumatic supply pipe (20) and releases it to the open air consists of a three-way solenoid valve (21).

5. Ejection device according to any of claims 1 to 3, characterised in that the means which pressurises the pneumatic supply pipe (20) and releases it to the open air consists of a two-way solenoid valve (30) with which an automatic relief cock (31) is associated.

6. Ejection device according to any of the preceding claims, characterised in that each ejection cylinder (6, 7) is equipped with a retention system (28, 29) which automatically immobilises the ejection piston (8, 9) in the retracted position at the end of the return travel.

7. Ejection device according to any one of the preceding claims, characterised in that the pipes (26, 27) connecting the pneumatic accumulator (22) to the retraction chambers of the ejection jacks (6, 8-7, 9) are substantially the same length.

## Patentansprüche

1. Hydraulische Auswurfvorrichtung mittels Ausstoßern mit Rückstelleinrichtung, wobei die Auswurfvorrichtung eine pneumatische Einrichtung (1) zum Steuern der Hydraulikversorgung der Ausgangskammern in zwei Richtungen wirkender hydraulischer Auswerfzylinder (6, 8 - 7, 9) sowie eine Einrichtung (21, 30, 31, 32) aufweist, welche selektiv die Druckbeaufschlagung mit Gas und die Verbindung einer pneumatischen Zuführleitung (20) der Steuereinrichtung (1) mit der Atmosphäre gewährleistet,
**dadurch gekennzeichnet**,
daß die Rückstellung der Auswerfzylinder (6, 8 - 7, 9) durch die pneumatische Versorgung der Rückziehkammern dieser Auswerfzylinder gewährleistet ist, wobei ein pneumatischer Sammelbehälter (22) zu diesem Zweck mit der Zuführleitung (20) über ein Rückstellsicherungselement (23) verbunden ist, das den Durchtritt von unter Druck stehendem Gas nur in Richtung der Zuführleitung (20) zum Sammelbehälter (22) hin gestattet, wobei der Sammelbehälter (22) über Leitungen (25, 26, 27) mit den Rückziehkammern für die Auswerfzylinder (6, 8 - 7, 9 verbunden ist.

2. Auswurfvorrichtung nach Anspruch 1,
**dadurch gekennzeichnet**,
daß die Ausstoßer zum Auswerfen (8, 9) so gestaltet sind, daß ihre Fläche, auf die der pneumatische Rückstelldruck einwirkt, welcher vom Sammelbehälter (22) kommt, wesentlich geringer ist als die Fläche, auf die der hydraulische Auswerfdruck einwirkt.

3. Auswurfvorrichtung nach Anspruch 1 oder 2,
**dadurch gekennzeichnet**,
daß sie ein Folgeventil (24) aufweist, das parallel zum Rückstellsicherungselement (23) angeordnet und so ausgelegt ist, daß es bei Ende der Rückstellphase der Auswerfausstoßer (8, 9), wenn der Druck in der Zuführleitung (20) unter einen vorgegebenen Wert abfällt, das Rückstellsicherungselement (23) unter Entleerung der Rückstelleitungen (25, 26, 27) kurzschließt.

4. Auswurfvorrichtung nach einem der Ansprüche 1 bis 3,
**dadurch gekennzeichnet**,
daß die Einrichtung, welche die Druckbeaufschlagung und die Entlastung der pneumatischen Zuführleitung (20) nach außen aus einem Dreiwege-Elektroventil (21) besteht.

5. Auswurfvorrichtung nach einem der Ansprüche 1 bis 3,
**dadurch gekennzeichnet**,
daß die Einrichtung, weiche die Druckbeaufschlagung und die Entlastung der pneumatischen Zuführleitung (20) nach außen gewährleistet, aus einem Dreiwege-Elektroventil (30) besteht, dem eine automatische Entlüftungseinrichtung (31) zugeordnet ist.

6. Auswurfvorrichtung nach einem der vorhergehenden Ansprüche,
**dadurch gekennzeichnet**,
jeder Auswerfzylinder (6, 7) mit einer Halteeinrichtung (28, 29) ausgerüstet ist, welche automatisch den Auswerfausstoßer (8, 9) bei Erreichen des Endes des Rückstellweges in zurückgezogener Stellung hält.

7. Auswurfvorrichtung nach einem der vorhergehenden Ansprüche,
**dadurch gekennzeichnet**,
daß die den pneumatischen Sammelbehälter (22) mit den Rückziehkammern der Auswerfzylinder (6, 8 - 7, 9) verbindenden Leitungen (26, 27) im wesentlichen gleiche Länge aufweisen.
